# EUROPÄISCHE PATENTSCHRIFT

(11) **EP 2 476 151 B1**
(45) Veröffentlichungstag und Bekanntmachung des Hinweises auf die Patenterteilung: **08.08.2018**
(21) Anmeldenummer: 10752562.8
(22) Anmeldetag: 06.09.2010
(51) Int. Cl.: H01M 10/60

(54) **MODULSPEICHERSYSTEM MIT EINEM MODULTRÄGER UND EINEM ENERGIESPEICHERMODUL**
MODULAR BATTERY STRUCTURE
CONSTRUCTION MODULAIRE POUR BATTERIE

(30) Priorität: 07.09.2009 DE 102009040197
(43) Veröffentlichungstag der Anmeldung: 18.07.2012
(73) Patentinhaber: MAHLE Behr GmbH & Co. KG, 70469 Stuttgart (DE)
(72) Erfinder: KOHLBERGER, Markus, 70174 Stuttgart (DE); MOSER, Michael, 73479 Ellwangen (DE); NEFF, Heiko, 71549 Auenwald (DE); JANZEN, Caroline, 70192 Stuttgart (DE); HERRMANN, Hans-Georg, 66132 Saarbrücken (DE)
(74) Vertreter: Grauel, Andreas
(86) Internationale Anmeldenummer: PCT/EP2010/063057
(87) Internationale Veröffentlichungsnummer: WO 2011/026984

(56) Entgegenhaltungen:
- EP-A1- 2 017 919
- DE-A1-102008 034 887
- US-A- 5 613 569
- US-A1- 2004 058 233
- US-A1- 2007 141 459
- US-B1- 7 045 236

## Beschreibung

Die vorliegende Erfindung bezieht sich auf einen Modulträger für ein Modulsystem, ein Energiespeichermodul für ein Modulsystem sowie ein Modulsystem.

In modernen HEV-/EV-Fahrzeugen werden leistungsfähige Energiespeicher wie zum Beispiel Li-Ionen- oder NiMH-Akkumulatoren oder Super-Caps eingesetzt. Bei diesen kommt es beim schnellen Laden und Entladen aufgrund von Widerständen in- und außerhalb der Zellen zur Erwärmung. Temperaturen über 50 °C schädigen die Energiespeicher dauerhaft. Um die Funktion der Energiespeicher zu gewährleisten, müssen diese gekühlt werden. Dazu werden die Energiespeicher mit einer mit Kältemittel oder Kühlmittel durchströmten Platte in thermischen Kontakt gebracht und somit gekühlt.

Bei der Kühlung der Zellen ist es wichtig, dass alle Zellen gleichmäßig gekühlt werden. Bei ungleichmäßiger Kühlung der Zellen altern die Zellen unterschiedlich schnell, was die Funktion und Leistung der Energiespeicher negativ beeinflusst. Des Weiteren sind die beschriebenen Energiespeicher mechanisch mit dem Fahrzeug zu verbinden, um eine sichere Befestigung zu gewährleisten und eine Beschädigung der Energiespeicher zu vermeiden. Hierbei müssen sowohl die aufzubringenden als auch die auftretenden Kräfte und Beschleunigungen aufgenommen werden sowie entsprechende geometrische Toleranzen der Energiespeicher überbrückt werden. Die betreffenden Energiespeicher können hierbei in beliebiger Bauart je nach beabsichtigtem Anwendungsfall ausgeführt sein.

Die zurzeit allgemein zur Anwendung kommenden Kühlsysteme für die genannten Akkusysteme beinhalten meist eine stark an den jeweiligen Anwendungsfall angepasste Bauform, was die Anzahl der Zellen, den Energieinhalt sowie die Kühlung betrifft. Insbesondere die Kühlung wird hierbei zumeist als eine einzelne oder mehrere mit Kühl- oder Kältemittel durchströmte Kühlplatten ausgeführt, die meist das gesamte Akkusystem bedienen.

Der Vortrag,, The Impact of Simulation Analysis an the Development of Battery Coolinq Systems for Hybrid Vehicles Peter Pichler, Product Manager Battery Systems, MAGNA STEYR Fahrzeugtechnik AG & Co. KG von der AABC (Advanced Automotive Battery Conference) 2008 beschreibt einen modularen Batterieaufbau, beidem die Wärmesenke jedoch schon in den Modulen intergriert ist. Bei der Batteriekomplettierung wird nur noch die Verbindung der einzelnen Kühlkanäle hergestellt.

Die Druckschrift US 2008/0090137 A1 beschreibt einen modularen Aufbau einer Batterie bei der das Modul aus Zellen und Kühlblechen besteht. Die fertige Batterie wird mit Luft gekühlt.

Die Module enthalten bereits die Kühlkanäle bzw. Verdampferplatte. Beim auswechseln einzelner Module müssen neben den elektrischen und mechanischen Verbindungen auch die Kühlmittelverbindungen zwischen den einzelnen Modulen getrennt werden. Dies erhöht die Kosten für das auswechseln einzelner Module erheblich und birgt die Gefahr von Undichtigkeiten.

Der Stand der Technik bildet sehr stark auf den jeweiligen Anwendungsfall angepasste Akku- und Kühlsysteme, deren Entwicklung und Herstellung unter anderem aufgrund der bislang noch relativ geringen Stückzahlen sehr aufwändig und teuer ist.

Die US 2004/0056233 A1 offenbart einen Batteriepack, der aus einer Mehrzahl von Batterieelementen besteht.

Die US 2007/0141459 A1 offenbart ebenfalls eine Batterievorrichtung, die aus einer Mehrzahl von einzelnen Batterieblöcken besteht, die zusammengesetzt sind.

Die EP 2 017 919 A1 offenbart eine Batterie für ein Kraftfahrzeug mit einem Kühlkanal zur Kühlung der Batterie.

Die US 7 045 236 B1 offenbart eine Wärme- und Gasaustauschsystem für eine Batterie mit einer Mehrzahl von einzelnen Batteriezellen. Dabei wird zwischen den Zellen ein Platz frei gelassen, durch welchen das Gas zum Wärmeaustauch strömen kann.

Die US 5 613 569 offenbart ein elektrisches Fahrzeug mit einer Batterie.

Die De 10 2008 034 887 A1 offenbart eine Kühlvorrichtung für eine Batterie eines Kraftfahrzeugs.

Es ist die Aufgabe der vorliegenden Erfindung, ein verbessertes Akkumulator- und Kühlsystem, beispielsweise für ein Fahrzeug, zu schaffen.

Diese Aufgabe wird durch einen Modulträger für ein Modulsystem gemäß Anspruch 1, ein Energiespeichermodul für ein Modulsystem gemäß Anspruch 8 sowie ein Modulsystem gemäß Anspruch 12 gelöst.

Kerngedanke des erfindungsgemäßen Konzepts ist eine Integration aller Schlüsselfunktionen auf Zellmodul-Ebene, also Kühlung sowie thermische und elektrische Kontaktierung. Eine grundlegende Idee ist die Entwicklung eines Standardmoduls mit geringem Adaptionsaufwand für alternative Zellgrößen und mit hohen Stückzahlen. Wichtige Eckpunkte sind dabei hohe Modularität, sehr schnelle und einfache Austauschbarkeit von Zellmodulen im Schadensfall und günstige Herstellung durch hohe Standardisierung und geringeren Applikationsaufwand.

Der vorliegenden Erfindung liegt die Erkenntnis zugrunde, dass durch ein deutliches Erhöhen des Modularisierungsgrades von Akkumulator- und Kühlsystemen ein System geschaffen werden kann, dass auf einer kleinen, einheitlichen Baugruppe basiert, die beispielsweise bereits alle relevanten Schnittstellen, insbesondere eine elektrische, eine mechanische und eine thermische, beinhaltet. Diese Einheit kann beliebig erweitert werden und mit sehr geringem Aufwand an den jeweiligen Anwendungsfall angepasst werden. Zudem ist durch die daraus resultierenden höheren Stückzahlen eine wirtschaftlichere und kostengünstigere Fertigung und Entwicklung erreichbar.

Die vorangehend beschriebene Aufgabe der Erfindung kann durch eine mehr oder minder kleine Basiseinheit erreicht werden. Diese Basiseinheit besteht aus einer Baugruppe, die einen oder mehrere Energiespeicher enthält sowie die notwendigen Schnittstellen. Hierbei können sowohl die elektrische, die mechanische als auch die thermische Schnittstelle bereits in diese Basiseinheit integriert sein. Diese Basiseinheit kann wiederum in ein Grundgestell integriert werden, das eine oder mehrere Basiseinheiten aufnehmen und je nach dem entsprechenden Anwendungsfall beliebig erweitert werden kann. Die Erfindung stellt ein neuartiges Design von Batteriesystemen für Hybrid- und Elektroanwendungen mit hoher Modularität als Alternative zu konventionellen Bauformen dar.

Vorteilhafterweise kann mit dem erfindungsgemäßen Konzept ein Batteriesystem mit relativ geringem Bauraum und Gewicht realisiert werden. Auch ist ein derartiges System durch hohe Flexibilität bezüglich des Designs gekennzeichnet. Gemäß dem erfinderischen Ansatz können identische Elemente in großen Stückzahlen hergestellt werden, wodurch eine höhere Wirtschaftlichkeit der Produktion erzielt werden kann. Ein modulares Akkumulator- und Kühlsystem gemäß dem erfinderischen Ansatz ermöglicht einen geringeren Applikationsaufwand für den einzelnen Anwendungsfall und somit geringere Entwicklungszeiten. Krafteinleitung und -übertragung sowie ein Toleranzausgleich bei den Energiespeichereinheiten sind vorteilhaft in einem Konzept vereinigt Schließlich zeichnet sich ein gemäß dem erfinderischen Ansatz hergestelltes und eingesetztes Akkumulator- und Kühlsystem durch eine wesentlich höhere Wartungs- und Servicefreundlichkeit aus.

Erfindungsgemäß können galvanische Zellen, insb. Li-Ionen Zellen zu einem mechanischen Modul verbunden werden. Diese Module können über wiederlösbare Zellverbinderplatinen elektrisch parallel und/oder seriell verschaltet und mit einer Wärmesenke verbunden werden. Die Module können, für den Fall das eine oder mehrere Zellen schadhaft sind, mit geringem Aufwand einzeln von der Kühlplatte getrennt und ausgetauscht werden. Die Kühlplatte und die Zellverbinderplatinen können somit erneut verwendet werden. Verschiedene Kühlplatten können je nach Anwendungsfall angebracht werden.

Vorteilelhafterweise stellen die Zellmodule nur noch eine mechanische Verbindung der Zellen dar. Zellverbinderplatine und Kühlplatte können bei Austausch einzelner Module beibehalten werden. Dies senkt im Schadensfall die Kosten für den Austausch der Batterie erheblich, da nur einzelne Module ausgetauscht werden müssen, und keine erneute Verbindung von Kühlkanälen notwendig ist. Aus identischen Zellmodulen können je nach (Leistungs-)Anforderungen spezifische Batterien zusammengebaut werden.

Die vorliegende Erfindung schafft einen Modulträger für ein Modulsystem, bei dem eine Mehrzahl von Energiespeichermodulen von mindestens einem Modulträger gehalten werden kann, wobei jedes der Energiespeichermodule zwei modulseitige Kühlfluidanschlüsse, einen modulseitigen elektrischen Kontakt und ein modulseitiges Kupplungselement aufweisen kann, wobei der Modulträger die folgenden Merkmale aufweisen kann: Ein Trägergehäuse, mit zwei einander gegenüberliegenden Seitenwänden; einen Kühlkanal zum Führen eines Kühlfluids, wobei der Kühlkanal in dem Trägergehäuse angeordnet sein und zwischen den Seitenwänden verlaufen kann; zwei trägerseitige Kühlfluidanschlüsse, die ausgebildet sein können, um mit den modulseitigen Kühlfluidanschlüssen verbunden zu werden, wobei die trägerseitigen Kühlfluidanschlüsse in einer der Seitenwände des Trägergehäuses angeordnet und mit dem Kühlkanal verbunden sein können; einen trägerseitigen elektrischen Kontakt, der ausgebildet sein kann, um mit dem modulseitigen elektrischen Kontakt verbunden zu werden; einen Kanal zum Führen einer elektrischen Leitung zu dem trägerseitigen elektrischen Kontakt, wobei der Kanal in dem Trägergehäuse angeordnet sein und zwischen den Seitenwänden verlaufen kann; und ein trägerseitiges Kupplungselement, das ausgebildet sein kann, um mit dem modulseitigen Kupplungselement verbunden zu werden, so dass das Energiespeichermodul an einer der Seitenwände gehalten werden kann und die trägerseitigen Kühlfluidanschlüsse fluiddicht mit den modulseitigen Kühlfluidanschlüssen verbunden sind.

Der Modulträger kann ein Teilelement eines Baukastensystems sein und ausgebildet sein, um ein oder eine Mehrzahl von Energiespeichermodulen aufzunehmen. Die Kühlfluidanschlüsse, elektrischen Kontakte und Kupplungselemente können vordefinierte Schnittstellen eines modularen Baukastensystems sein. Dies bedeutet, dass die Positionen und Ausführungsformen der Schnittstellen an einzelnen Basiseinheiten oder Grundgestellen, also dem Modulträger und dem Energiespeichermodul, des Baukastensystems vordefiniert sind. Die modulseitigen Anschlüsse bilden somit jeweils ein Gegenstück zu den trägerseitigen Anschlüssen. Die Schnittstellen können so ausgelegt sein, dass die jeweils angestrebte elektrische, mechanische oder thermische Verbindung durch ein einfaches Zusammenfügen, beispielsweise Zusammenschieben oder Einhaken, der Basiseinheit in das Grundgestell gewährleistet wird.

Gemäß einer Ausführungsform können der Kühlkanal und der Kanal zum Führen einer elektrischen Leitung benachbart zueinander in dem Trägergehäuse angeordnet sein. Dazu kann ein gemeinsamer oder getrennte Führungskanäle vorgesehen sein.

Gemäß einer weiteren Ausführungsform kann der trägerseitige Kühlfluidanschluss einen Flansch aufweisen. Dies ermöglicht eine einfach zu handhabende und dennoch fluiddichte Verbindung zwischen Modul und Träger.

Ferner kann das trägerseitige Kupplungselement als mindestens eine Schiene ausgebildet sein, die im Wesentlichen rechtwinklig zu den Seitenwänden des Trägergehäuses angeordnet ist. So kann das Energiespeichermodul mittels Einschieben des modulseitigen Kupplungselements in die mindestens eine Schiene gehalten werden.

Alternativ kann das trägerseitige Kupplungselement als eine Einrichtung zum Aufnehmen eines Einhakelements ausgebildet sein. Die Einrichtung zum Aufnehmen eines Einhakelements kann an einer der Seitenwände des Trägergehäuses angeordnet sein, so dass das Energiespeichermodul mittels Einhaken des modulseitigen Kupplungselements in die Einrichtung zum Aufnehmen eines Einhakelements gehalten werden kann. Dabei können die Schnittstellen so ausgeführt sein, das die jeweils angestrebte Verbindung während der Einhakbewegung realisiert werden kann.

Ferner kann das Trägergehäuse mindestens ein Verbindungselement aufweisen, das ausgebildet sein kann, um den Modulträger so mit einem weiteren Modulträger zu verbinden, dass die Kühlkanäle des Modulträgers und des weiteren Modulträgers verbunden sind. Auf diese Weise lässt sich das System beliebig erweitern.

Gemäß einer Ausführungsform kann jede der zwei einander gegenüberliegenden Seitenwände mindestens einen trägerseitigen Kühlfluidanschluss, mindestens einen trägerseitigen elektrischen Kontakt und mindestens ein trägerseitiges Kupplungselement aufweisen. Auf diese Weise können Module beidseitig des Trägers angeordnet werden.

Die vorliegende Erfindung schafft ferner ein Energiespeichermodul für ein Modulsystem, bei dem eine Mehrzahl von Energiespeichermodulen von mindestens einem Modulträger gehalten werden kann, wobei jeder der Modulträger zwei trägerseitige Kühlfluidanschlüsse, einen trägerseitigen elektrischen Kontakt und ein trägerseitiges Kupplungselement aufweisen kann, und wobei das Energiespeichermodul ausgebildet sei kann, um mindestens eine elektrochemische Energiespeichereinheit aufzunehmen und die folgenden Merkmale aufweisen kann: Eine Kühlplatte mit einer Mehrzahl von Kühlfluidkanälen, wobei die Kühlplatte eine Grundplatte des Energiespeichermoduls bilden kann; mindestens eine Haltefläche zum Bilden eines Wandbereichs des Energiespeichermoduls; zwei modulseitige Kühlfluidanschlüsse, die ausgebildet sein können, um mit den trägerseitigen Kühlfluidanschlüssen verbunden zu werden, und wobei die modulseitigen Kühlfluidanschlüsse mit den Kühlfluidkanälen der Kühlplatte gekoppelt sein können; einen modulseitigen elektrischen Kontakt, der ausgebildet sein kann, um mit dem trägerseitigen elektrischen Kontakt verbunden zu werden, und wobei der modulseitige elektrische Kontakt mit der mindestens einen elektrochemischen Energiespeichereinheit verbunden werden kann; ein modulseitiges Kupplungselement, das ausgebildet sei kann, um mit dem trägerseitigen Kupplungselement verbunden zu werden, so dass das Energiespeichermodul an einer der Seitenwände des Trägergehäuses des Modulträgers gehalten werden kann und die modulseitigen Kühlfluidanschlüsse fluiddicht mit den trägerseitigen Kühlfluidanschlüssen verbunden sind.

Bei der elektrochemischen Energiespeichereinheit kann es sich beispielsweise um Li-Ionen- oder NiMH-Akkumulatoren, Super-Caps oder allgemein um galvanische Zellen handeln. Eine oder mehrere der Energiespeichereinheiten können auf der Kühlplatte angeordnet sein, und somit von dieser gekühlt werden. Die Verbindung zwischen den Energiespeichereinheiten und der Kühlplatte kann lose sein, so dass eine defekte Energiespeichereinheit einfach ausgetauscht werden kann. Die Haltefläche kann ausgebildet sein, um die Energiespeichereinheiten seitlich zu umspannen und zu fixieren. Die Haltefläche kann als Halteblech aus Metall oder alternativ aus Kunststoff ausgeführt sein.

Gemäß einer Ausführungsform kann das Energiespeichermodul zwei Kühlfluidkästen aufweisen. Dabei kann jeweils einer der modulseitigen Kühlfluidanschlüsse an jeweils einem der Kühlfluidkästen angeordnet sein. Entsprechend kann das Energiespeichermodul auch zwei Haltebleche aufweisen. Die Haltebleche können jeweils zwischen einem der Kühlfluidkästen und der Kühlplatte angeordnet sein und jeweils eine Durchgangsöffnung zum Durchführen des Kühlfluids zwischen dem jeweiligen Kühlfluidkasten und den Kühlfluidkanälen aufweisen. Die Kühlfluidkästen bieten eine Möglichkeit zur Zuführung und Abführung des durch die Kühlplatte geleiteten Kühlfluid.

Beispielsweise kann das modulseitige Kupplungselement als ein Schienenelement ausgebildet sein. Dieses kann an zumindest einem der Wasserkästen angeordnet sein, so dass das Schienenelement in das trägerseitige Kupplungselement eingeschoben werden kann.

Alternativ kann das modulseitige Kupplungselement als ein Einhakelement ausgebildet sein. Das Einhakelement kann an dem Halteblech des Energiespeichermoduls angeordnet sein, so dass das Einhakelement in das trägerseitige Kupplungselement eingehakt werden kann.

Schließlich schafft die vorliegende Erfindung ein Modulsystem mit mindestens einem erfindungsgemäßen Modulträger und mindestens einem erfindungsgemäßen Energiespeichermodul, das mit dem mindestens einen Modulträger verbunden sein kann.

Vorteilhafte Ausführungsbeispiele der vorliegenden Erfindung werden nachfolgend Bezug nehmend auf die beiliegenden Zeichnungen näher erläutert. Es zeigen:
- Fig. 1: eine perspektivische Darstellung eines Modulsystems gemäß einem Ausführungsbeispiel der Erfindung;
- Fig. 2: eine perspektivische Darstellung eines Modulträgers gemäß einem Ausführungsbeispiel der Erfindung;
- Fig. 3: eine perspektivische Darstellung einer Bildung eines erweiterten Mo-dulsystems gemäß einem Ausführungsbeispiel der Erfindung;
- Fig. 4: eine perspektivische Darstellung eines Herstellungsschrittes für eine Einhakverbindung eines Energiespeichermoduls mit einem Modulträ-ger, gemäß einem Ausführungsbeispiel der Erfindung;
- Fig. 5: eine perspektivische Darstellung eines weiteren Herstellungsschrittes für eine Einhakverbindung eines Energiespeichermoduls mit einem Mo-dulträger, gemäß einem Ausführungsbeispiel der Erfindung;
- Fig. 6: eine perspektivische Darstellung eines Energiespeichermoduls gemäß einem Ausführungsbeispiel der Erfindung;
- Fig. 7: eine perspektivische Darstellung eines Teils des Energiespeichermoduls aus Fig. 6 und von innerhalb des Gehäuses angeordneten elektrochemischen Energiespeichereinheiten, gemäß einem Ausführungsbeispiel der Erfindung;
- Fig. 8: eine auseinandergezogene perspektivische Darstellung von Elementen eines Energiespeichermoduls gemäß einem Ausführungsbeispiel der Erfindung; und
- Fig. 9: eine schematische Darstellung eines alternativen Modulsystems gemäß einem Ausführungsbeispiel der Erfindung.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

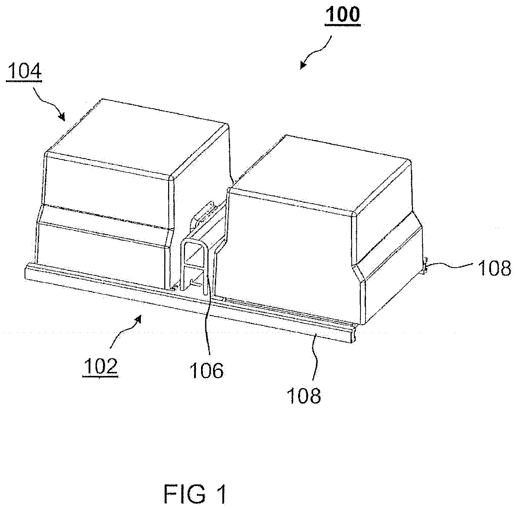

Fig. 1 zeigt eine perspektivische Darstellung eines Modulsystems 100 gemäß einem Ausführungsbeispiel der Erfindung. Gezeigt ist ein Modulträger 102, der zwei Energiespeichermodule 104 trägt. Der Modulträger 102 weist ein Trägergehäuse 106 mit zwei sich gegenüberliegenden Seitenwänden sowie zwei Schienen 108 auf, die jeweils etwa im rechten Winkel an dem Trägergehäuse 106 angeordnet sind und sich jeweils in entgegengesetzte Richtungen von dem Trägergehäuse 106 weg erstrecken. Jedes der Energiespeichermodule 104 ist benachbart zu je einer der Seitenwände des Trägergehäuses 106 angeordnet. Die Energiespeichermodule 104 können durch Einschieben in die Schienen 108, aus jeweils entgegengesetzten Richtungen, mit dem Modulträger 102 verbunden werden.

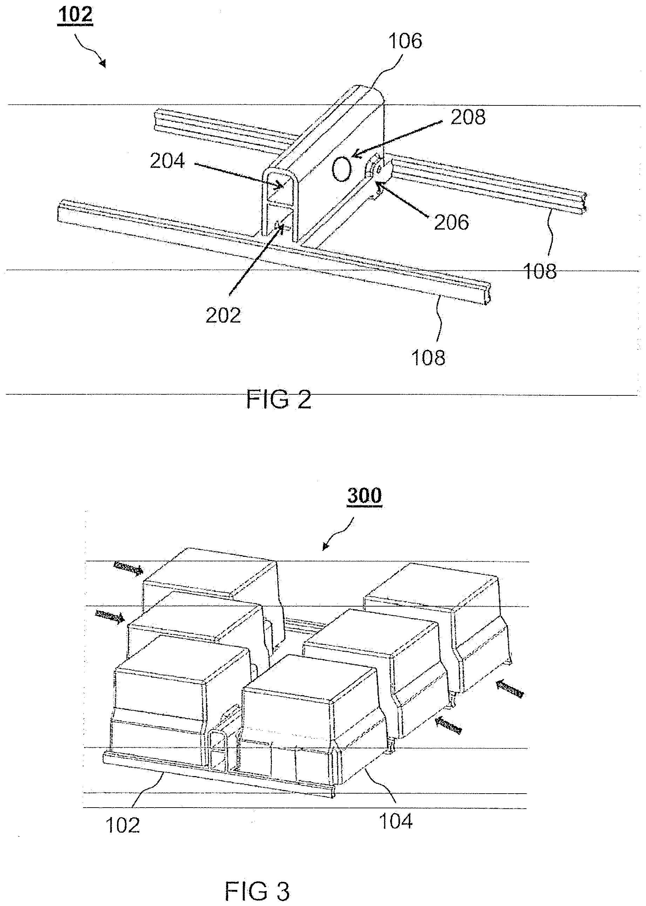

Fig. 2 zeigt eine perspektivische Darstellung des Modulträgers 102 aus Fig. 1. Der Modulträger 102 ist als ein modularer Halterahmen für jeweils zwei 6er-Module mit integriertem Sammelkanal für Kühlmedium und elektrische Leitungen ausgebildet. Der Aufbau des Halterahmens 102 umfasst wiederum das Trägergehäuse 106 und die zwei Schienen 108. Der integrierte Sammelkanal des Modulträgers 102 ist in dem Trägergehäuse 106 angeordnet und setzt sich aus einem Kühlkanal 202 zum Führen eines Kühlmediums und einem Kanal 204 zum Führen elektrischer Komponenten zusammen. Zudem weist der Modulträger 102 einen Kühlfluidanschluss 206 sowie einen elektrischen Kontakt 208 auf.

Der Kühlkanal 202 und der Kanal 204 zum Führen der elektrischen Komponenten verlaufen in einer Längsrichtung des Trägergehäuses 106 und sind durch einen Gehäusesteg voneinander getrennt. In Fig. 2 verläuft der Kanal 204 zum Führen der elektrischen Komponenten oberhalb des Kühlkanals 202. Der Kühlfluidanschluss 206 durchdringt in Höhe des Kühlkanals 202 die Seitenwand des Trägergehäuses 106. Der Kühlfluidanschluss 206 weist einen Anschlussflansch auf, um einen fluiddichten Übergang für das Kühlmedium zwischen Kühlkanal 202 und einem weiteren Element, beispielsweise einem Energiespeichermodul, zu ermöglichen. Bei dem in Fig. 2 gezeigten Ausführungsbeispiel ist unterhalb des Kühlfluidanschlusses 206 ein weiterer Kühlfluidanschluss 206 angeordnet. Der elektrische Kontakt 208 durchdringt in Höhe des Kanals 204 zum Führen der elektrischen Komponenten die Seitenwand des Trägergehäuses 106. Der elektrische Kontakt 208 ist als ein Steckverbinder für Leistungsstrom und Datenaustausch ausgebildet. Über den integrierten Anschlussflansch kann bei Einsetzen eines Moduls in den Modulträger 102 eine automatische elektrische und hydraulische Kontaktierung des Energiespeichermoduls über die Schnittstellen 206, 208 erzielt werden.

Die zwei Schienen 108 sind jeweils an gegenüberliegenden Enden der Seitenwand des Trägergehäuses 106 angeordnet und erstrecken sich von dem Trägergehäuse weg jeweils in entgegengesetzte Richtungen. Die Schienen 108 können Nute zum Aufnehmen von Energiespeichermodulen aufweisen. In der perspektivische Darstellung des Modulträgers 102 ist eine gegenüberliegende weitere Seitenwand nicht zu sehen, die einen weiteren elektrischen Kontakt 208 und einen oder mehrere weitere Kühlfluidanschlüsse 206 aufweisen kann.

Fig. 3 zeigt einen Aufbau eines Modulsystems 300 gemäß einem Ausführungsbeispiel der Erfindung. In Fig. 3 ist zu sehen, dass durch eine Assemblierung mehrerer Halterahmen 102 auf eine Anzahl von vier, sechs, acht, etc. die Module in Reihe erweitert werden können. So lässt sich ein für die verschiedensten Anwendungsfälle geeignetes Design des Modulsystems 300 realisieren. Die in Fig. 3 dargestellten Pfeile deuten eine horizontale Montagerichtung der Energiespeichermodule 104 an, die durch Einschieben in die Schienen der assemblierten Modulträger 102 an den Trägergehäusen der Modulträger 102 befestigt werden. Eine Montagerichtung der Zellmodule 104 ist sowohl In horizontaler als auch in vertikaler Richtung denkbar.

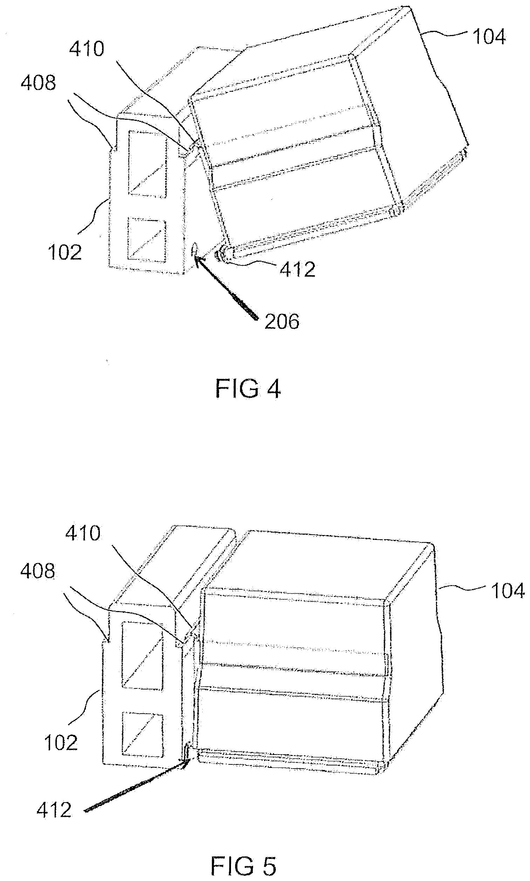

Figuren 4 und 5 zeigen eine alternative Befestigungsmöglichkeit zwischen Modulträger und Energiespeichermodul über ein Einhaken einer Haltenase und ein darauffolgendes Einschwenken.

Fig. 4 zeigt eine perspektivische Darstellung eines Montageschrittes für eine Einhakverbindung zwischen einem Energiespeichermodul 104 und einem Modulträger 102, gemäß einem Ausführungsbeispiel der Erfindung. Das in Fig. 4 gezeigte Ausführungsbeispiel des Modulträgers 102 unterscheidet sich von dem in den vorangehenden Figuren dargestellten Ausführungsbeispiel des Modulträgers 102 darin, dass das trägerseitige Kupplungselement des Modulträgers 102 nicht in Form von Schienen sondern als eine Einhakleiste oder Einhaknut 408 ausgebildet ist. Entsprechend weist das in Fig. 4 gezeigte Ausführungsbeispiel des Energiespeichermoduls 104 an einer Seite ein Einhakelement 410 auf, das ausgebildet ist, um in die Einhakleiste oder Einhaknut 408 eingehängt zu werden. Entsprechend zeigt Fig. 4 eine mechanische Verbindung des Energiespeichermoduls 104 mit dem Modulträgers 102 über ein Einhaken des Einhakelements 410 in die Einhakleiste oder Einhaknut 408. Ebenfalls in Fig. 4 zu sehen ist, dass der Modulträger 102 den trägerseitigen Kühlfluidanschluss 206 aufweist und das Energiespeichermodul 104 einen modulseitigen Kühlfluidanschluss 412 aufweist.

Fig. 5 zeigt eine perspektivische Darstellung eines weiteren Herstellungsschrittes für die Einhakverbindung eines Energiespeichermoduls mit einem Modulträger, gemäß dem bereits in Fig. 4 gezeigten Ausführungsbeispiel. Die Darstellung in Fig. 5 zeigt, dass zusätzlich zu der mechanischen Verbindung nun auch eine Hydraulikverbindung zwischen dem Trägermodul 102 und dem Energiespeichermodul 104 besteht. Der modulseitige Kühlfluidanschluss 412 ist in den trägerseitigen Kühlfluidanschluss 206 eingebracht. Über einen Flansch des modulseitigen Kühlfluidanschlusses 412 ist eine fluiddichte Verbindung zwischen dem Energiespeichermodul 104 und dem Trägermodul 102 hergestellt.

Durch die in den Figuren 4 und 5 gezeigten Verbindungsschritte ist somit eine automatische Befestigung durch die hydraulischen Anschlüsse 206, 412 möglich.

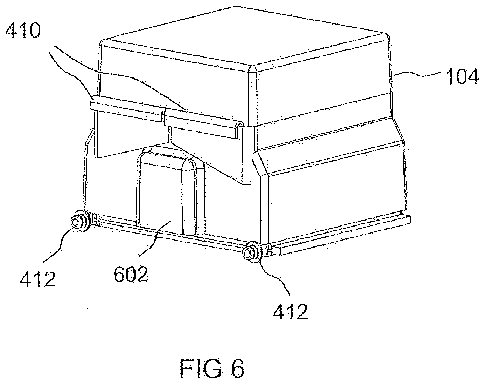

Fig. 6 zeigt eine perspektivische Ansicht des Energiespeichermoduls 104 als ein Ausführungsbeispiel der Einhakvariante mit einer Modulabdeckung. Deutlich zu sehen sind zwei Einhakelemente 410 sowie zwei Kühlfluidanschlüsse 412 des Energiespeichermoduls 104. In Fig. 6 ist auch ein elektrischer Kontakt 602 des Energiespeichermoduls 104 gezeigt, der mit einem elektrischen Kontakt eines Modulträgers verbindbar ist.

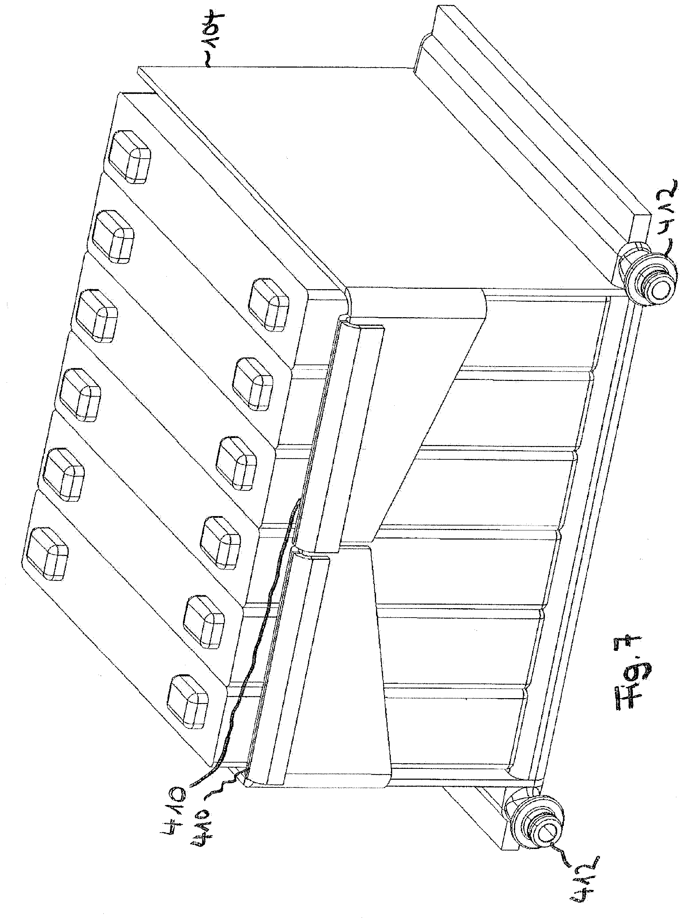

Fig. 7 zeigt wiederum das Ausführungsbeispiel der Einhakvariante, wobei Teile des Energiespeichermoduls 104 sowie die Modulabdeckung weggelassen sind, so dass eine Innenansicht des Energiespeichermoduls 104 ermöglicht wird. Das in Fig. 7 gezeigte Ausführungsbeispiel des Energiespeichermoduls 104 ist mit einer Anzahl von sechs elektrochemischen Energiespeichereinheiten bestückt. In weiteren Ausführungsbeispielen des Energiespeichermoduls 104 sind andere Stückzahlen von elektrochemischen Energiespeichereinheiten möglich.

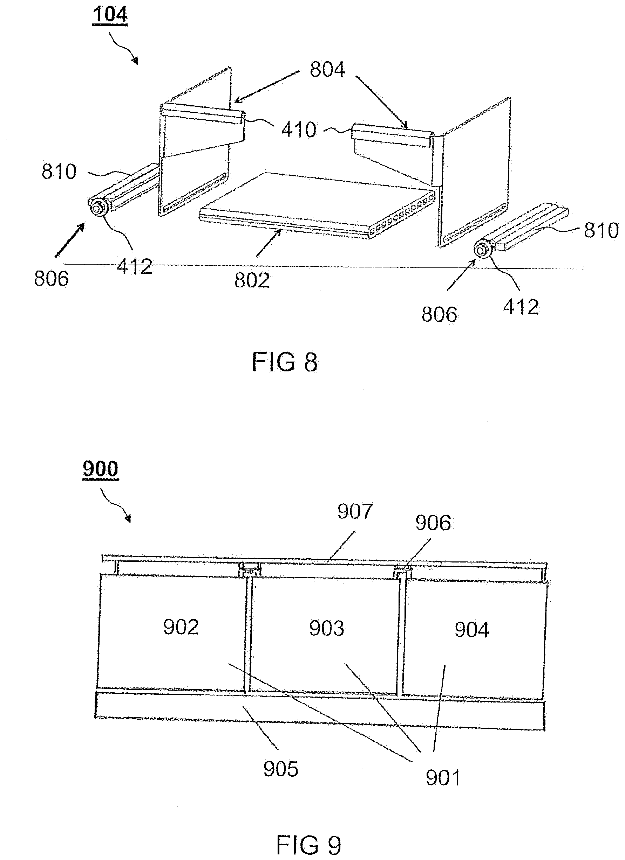

Fig. 8 zeigt in einer auseinandergezogenen perspektivischen Darstellung ein Ausführungsbeispiel eines Aufbaus der Einhakvariante des Zellmoduls 104. Gezeigt sind eine Kühlplatte 802, zwei Haltebleche 804 sowie zwei Kühlfluidkästen 806 mit je einem Kühlfluidanschluss 412.

Die Kühlplatte 802 weist Kühlfluidkanäle auf, die parallel zueinander angeordnet sein können und die Kühlplatte 802 in einer Längsrichtung durchstoßen können. Die Kühlplatte 802 kann beispielsweise in Schichtblechbauweise gebildet sein. Daneben gibt es noch andere Konstruktionsmöglichkeiten, z.B. kann die Kühlplatte 802 aus einem Strangpressprofil hergestellt sein. Die Haltebleche 804 setzen sich aus je einer größeren und einer kleineren Wand zusammen, die im Wesentlichen rechtwinklig miteinander verbunden sind. Dabei weist die größere Wand an einem unteren Rand eine Längsöffnung auf, die sich nahezu über eine Seitenlänge der Wand erstreckt. Eine Fläche der kleineren Wand verringert sich zu einem Ende der Wand hin. Die kleinere Wand weist an ihrer Oberkante eine Umbiegung auf, die das Einhakelement 410 der Einhakvariante des Energiespeichermoduls 104 bildet. Die Haltebleche 804 dienen der Zellmodulbefestigung und Zellenverspannung. Gegebenenfalls können die Haltebleche auch ausgebildet sein, um eine zusätzliche Kühlaufgabe zu übernehmen. Die Kühlfluidkästen 806 sind als längliche Behälter ausgebildet, die jeweils an einem Ende mit einem Kühlfluidanschluss 412 abschließen. Die Kühlfluidkästen 806 sind an einer der Längsseiten offen, so dass ein Austausch des Kühlfluids mit der Kühlplatte 802 möglich ist. An einer der offenen Längsseite gegenüberliegenden Seite weisen die Wasserkästen 412 je ein Schienenelement 810 auf, so dass das Energiespeichermodul 104 in einem zusammengebauten Zustand in die Schienen eines Modulträgers eingeschoben werden kann.

Für eine Montage des Zellmoduls 104 werden die Haltebleche 804 zwischen einander gegenüberliegenden Enden der Kühlplatte 802 und je einem Wasserkasten 806 angeordnet. Jedes der Haltebleche 804 ist dabei so angeordnet, dass die Längsöffnung des Haltebleches 804 zwischen den Öffnungen der Kühlfluidkanäle in der Kühlplatte 802 und der offenen Seite des jeweiligen Kühlfluidkastens 806 liegt. Die kleineren Wände der Haltebleche 804 sind dabei so ausgerichtet, dass sie zueinander hinweisen. Im zusammengebauten Zustand bilden so die Kühlplatte 802 und die zwei Haltebleche 804 Grundplatte und Seitenwände eines Gehäuses zum geeigneten Halten einer Anzahl von elektrochemischen Energiespeichereinheiten. Zum Verbinden der Elemente werden abschließend die Wasserkästen 806 so an die Haltebleche 804 angebracht, dass die Kühlfluidkästen 806 über die Längsöffnungen der Haltebleche 804 mit der Kühlplatte 802 verbunden sind.

Fig. 9 zeigt eine schematische Darstellung eines alternativen Modulsystems 900 gemäß einem Ausführungsbeispiel der Erfindung. Insbesondere ist eine Anbindung von Batteriemodul, Insbesondere aus Li-lon Zellen an eine Wärmesenke gezeigt. Gezeigt ist eine Batterie 901, bestehend aus drei Zellmodulen 902, 903 und 904, die mit einer Wärmesenke 905 verbunden sind. Die Zellmodule 902, 903 und 904 weisen elektrische Verbindungen 906 auf. Eine CSC Platine 907 überwacht die Zellen 902, 903 und 904. Gemäß Fig. 9 ist ein Aufbau eines Moduls mit Zellen und elektrischen und/oder kühltechnischen Komponenten sowie einer lösbaren Verbindungseinheit zur Kühlplatte gezeigt. Die lösbare Verbindung kann z.B. durch eine Verschraubung realisiert werden. Kühlelemente sind schon im Modul enthalten und werden über diese Verbindungseinheit in einen thermischen Kontakt mit der Kühlplatte gebracht. Somit entfällt ein aufwändiges Anbinden von einzelnen Zellen oder ganzen Modulen mit der Wärmesenke und das Verbinden der einzelnen Module miteinander.

Die beschriebenen Ausführungsbeispiele sind nur beispielhaft gewählt und können miteinander kombiniert werden.

Die in dieser Erfindungsmeldung beschriebenen Konzepte und Ansätze stellen gemäß den technischen Möglichkeiten sinnvolle Ausführungen dar. Es sind jedoch auch entsprechende Variationen bedingt durch die geometrische Gestaltung der Energiespeichergehäuse oder der Kühlungskomponenten denkbar.

Die Größe der Basiseinheit kann variiert werden, ebenso wie die Anzahl der darin untergebrachten Energiespeicher. Ebenso kann der Umfang der integrierten Funktionen und Schnittstellen variieren, beispielsweise ist eine ausgelagerte Kühlung, etc. denkbar. Ebenso kann die Kühlung hierbei in jeder gängigen und aus technischer Sicht für den jeweiligen Anwendungsfall sinnvollen Art und Weise erfolgen. Mögliche Varianten sind dabei freie oder erzwungene Konvektion, Latentkühlung, Kühl- oder Kältemittel.

## Patentansprüche

1. Modulträger (102) für ein Modulsystem (100; 300), bei dem eine Mehrzahl von Energiespeichermodulen (104) von mindestens einem Modulträger gehalten werden kann, wobei jedes der Energiespeichermodule zwei modulseitige Kühlfluidanschlüsse (412), einen modulseitigen elektrischen Kontakt (602) und ein modulseitiges Kupplungselement (410; 810) aufweist, wobei der Modulträger die folgenden Merkmale aufweist:
ein Trägergehäuse (106), mit zwei einander gegenüberliegenden Seitenwänden;
einen Kühlkanal (202) zum Führen eines Kühlfluids, wobei der Kühlkanal in dem Trägergehäuse angeordnet ist und zwischen den Seitenwänden verläuft;
zwei trägerseitige Kühlfluidanschlüsse (206), die ausgebildet sind, um mit den modulseitigen Kühlfluidanschlüssen verbunden zu werden, und wobei die trägerseitigen Kühlfluidanschlüsse in einer der Seitenwände des Trägergehäuses angeordnet sind und mit dem Kühlkanal verbunden sind;
einen trägerseitigen elektrischen Kontakt (208), der ausgebildet ist, um mit dem modulseitigen elektrischen Kontakt verbunden zu werden;
einen Kanal (204) zum Führen einer elektrischen Leitung zu dem trägerseitigen elektrischen Kontakt, wobei der Kanal in dem Trägergehäuse angeordnet ist und zwischen den Seitenwänden verläuft; und
ein trägerseitiges Kupplungselement (108; 408), das ausgebildet ist, um mit dem modulseitigen Kupplungselement verbunden zu werden, so dass das Energiespeichermodul (104) an einer der Seitenwände gehalten wird und die trägerseitigen Kühlfluidanschlüsse fluiddicht mit den modulseitigen Kühlfluidanschlüssen verbunden sind.

2. Modulträger (102) gemäß Anspruch 1, bei dem der Kühlkanal (202) und der Kanal (204) zum Führen einer elektrischen Leitung benachbart zueinander in dem Trägergehäuse (106) angeordnet sind.

3. Modulträger (102) gemäß Anspruch 1 oder 2, bei dem der trägerseitige Kühlfluidanschluss (206) einen Flansch aufweist.

4. Modulträger (102) gemäß einem der Ansprüche 1 bis 3, bei dem das trägerseitige Kupplungselement (108; 408) als mindestens eine Schiene ausgebildet ist, die im Wesentlichen rechtwinklig zu den Seitenwänden des Trägergehäuses (106) angeordnet ist, so dass das Energiespeichermodul (104) mittels Einschieben des modulseitigen Kupplungselements (410; 810) in die mindestens eine Schiene gehalten werden kann.

5. Modulträger (102) gemäß einem der Ansprüche 1 bis 3, bei dem das trägerseitige Kupplungselement (108; 408) als eine Einrichtung zum Aufnehmen eines Einhakelements ausgebildet ist, die an einer der Seitenwände des Trägergehäuses (106) angeordnet ist so dass das Energiespeichermodul (104) mittels Einhaken des modulseitigen Kupplungselements (410; 810) in die Einrichtung zum Aufnehmen eines Einhakelements gehalten werden kann.

6. Modulträger (102) gemäß einem der vorangegangenen Ansprüche, bei dem das Trägergehäuse (106) mindestens ein Verbindungselement aufweist, das ausgebildet ist, um den Modulträger so mit einem weiteren Modulträger zu verbinden, dass die Kühlkanäle (202) des Modulträgers und des weiteren Modulträgers verbunden sind.

7. Modulträger (102) gemäß einem der vorangegangenen Ansprüche, bei dem jede der zwei einander gegenüberliegenden Seitenwände mindestens einen trägerseitigen Kühlfluidanschluss (206), mindestens einen trägerseitigen elektrischen Kontakt (208) und mindestens ein trägerseitiges Kupplungselement (108; 408) aufweist.

8. Energiespeichermodul (104) für ein Modulsystem (100; 300), bei dem eine Mehrzahl von Energiespeichermodulen von mindestens einem Modulträger (102) gemäß einem der vorhergehenden Ansprüche gehalten werden kann, wobei jeder der Modulträger zwei trägerseitige Kühlfluidanschlüsse (206), einen trägerseitigen elektrischen Kontakt (208) und ein trägerseitiges Kupplungselement (108; 408) aufweist, und wobei das Energiespeichermodul ausgebildet ist, um mindestens eine elektrochemische Energiespeichereinheit aufzunehmen und die folgenden Merkmale aufweist:
eine Kühlplatte (802) mit einer Mehrzahl von Kühlfluidkanälen, wobei die Kühlplatte eine Grundplatte des Energiespeichermoduls bildet;
mindestens eine Haltefläche, insbesondere ein Halteblech (804), zum Bilden eines Wandbereichs des Energiespeichermoduls;
zwei modulseitige Kühlfluidanschlüsse (412), die ausgebildet sind, um mit den trägerseitigen Kühlfluidanschlüssen verbunden zu werden, und wobei die modulseitigen Kühlfluidanschlüsse mit den Kühlfluidkanälen der Kühlplatte gekoppelt sind;
einen modulseitigen elektrischen Kontakt (602), der ausgebildet ist, um mit dem trägerseitigen elektrischen Kontakt verbunden zu werden, und wobei der modulseitige elektrische Kontakt mit der mindestens einen elektrochemischen Energiespeichereinheit verbunden werden kann;
ein modulseitiges Kupplungselement (410; 810), das ausgebildet ist, um mit dem trägerseitigen Kupplungselement verbunden zu werden, so dass das Energiespeichermodul an einer der Seitenwände des Trägergehäuses (106) des Modulträgers (102) gehalten wird und die modulseitigen Kühlfluidanschlüsse (412) fluiddicht mit den trägerseitigen Kühlfluidanschlüssen verbunden sind.

9. Energiespeichermodul (104) gemäß Anspruch 8, das zwei Kühlfluidkästen (806) aufweist, wobei jeweils einer der modulseitigen Kühlfluidanschlüsse (412) an jeweils einem der Kühlfluidkästen angeordnet ist, und mit zwei Halteflächen (804), die jeweils zwischen einem der Kühlfluidkästen und der Kühlplatte (802) angeordnet sind und jeweils eine Durchgangsöffnung zum Durchführen des Kühlfluids zwischen dem jeweiligen Kühlfluidkasten und den Kühlfluidkanälen aufweisen.

10. Energiespeichermodul (104) gemäß Anspruch 9, bei dem das modulseitige Kupplungselement (410; 810) als ein Schienenelement ausgebildet ist, das an zumindest einem der Wasserkästen angeordnet ist, so dass das Schienenelement in das trägerseitige Kupplungselement eingeschoben werden kann.

11. Energiespeichermodul (104) gemäß Anspruch 8 oder 9, bei dem das modulseitige Kupplungselement (410; 810) als ein Einhakelement ausgebildet ist, das an der Haltefläche (804) des Energiespeichermoduls angeordnet ist, so dass das Einhakelement in das trägerseitige Kupplungselement eingehakt werden kann.

12. Modulsystem (100; 300) mit mindestens einem Modulträger (102) gemäß einem der Ansprüche 1 bis 7 und mindestens einem Energiespeichermodul (104) gemäß einem der Ansprüche 8 bis 11, das mit dem mindestens einen Modulträger verbunden ist.

## Claims

1. A module support (102) for a modular system (100; 300), wherein a plurality of energy storage modules (104) can be held by at least one module support, whereby each energy storage module has two module-side cooling fluid connections (412), a module-side electrical contact (602), and a module-side coupling element (410; 810), wherein the module support has the following features:
a support housing (106) with two side walls opposite to one another;
a cooling channel (202) for carrying a cooling fluid, wherein the cooling channel is arranged in the support housing and runs between the side walls;
two support-side cooling fluid connections (206), which are designed to be connected to the module-side cooling fluid connections, and wherein the support-side cooling fluid connections are arranged in one of the side walls of the support housing and connected to the cooling channel;
a support-side electrical contact (208), which is designed to be connected to the module-side electrical contact;
a channel (204) for carrying an electrical line to the support-side electrical contact, wherein the channel is arranged in the support housing and runs between the side walls; and
a support-side coupling element (108; 408), which is designed to be connected to the module-side coupling element, so that the energy storage module (104) is held on one of the side walls and the support-side cooling connections are connected to the module-side cooling fluid connections in a fluid-tight manner.

2. The module support (102) according to claim 1, wherein the cooling channel (202) and the channel (204) for carrying an electrical line are arranged adjacent to one another in the support housing (106).

3. The module support (102) according to claim 1 or 2, wherein the support-side cooling fluid connection (206) has a flange.

4. The module support (102) according to one of claims 1 through 3, wherein the support-side coupling element (108; 408) is designed as at least one rail, which is arranged substantially at right angles to the side walls of the support housing (106), so that the energy storage module (104) can be held by means of insertion of the module-side coupling element (410; 810) into the at least one rail.

5. The module support (102) according to any one of claims 1 through 3, wherein the support-side coupling element (108; 408) is designed as a device for receiving a hooking element, which is arranged on one of the side walls of the support housing (106), so that the energy storage module (104) can be held by means of hooking of the module-side coupling element (410; 810) into the device for receiving a hooking element.

6. The module support (102) according to any one of the preceding claims, wherein the support housing (106) has at least one connecting element, which is designed to connect the module support to another module support, so that the cooling channels (202) of the module support and the additional module support are connected.

7. The module support (102) according to any one of the preceding claims, wherein each of the two opposite side walls has at least one support-side cooling fluid connection (206), at least one support-side electrical contact (208), and at least one support-side coupling element (108; 408).

8. An energy storage module (104) for a modular system (100; 300), wherein a plurality of energy storage modules can be held by at least one module support (102) according to any one of the preceding claims, wherein each module support has two support-side cooling fluid connections (206), a support-side electrical contact (208), and a support-side coupling element (108; 408), and wherein the energy storage module is designed to accommodate at least one electrochemical energy storage unit and has the following features:
a cooling plate (802) with a plurality of cooling fluid channels, wherein the cooling plate forms a base plate of the energy storage module;
at least one holding surface, particularly a holding sheet (804), for forming a wall region of the energy storage module;
two module-side cooling fluid connections (412), which are designed to be connected to the support-side cooling fluid connections, and wherein the module-side cooling fluid connections are coupled to the cooling fluid channels of the cooling plate;
a module-side electrical contact (602), which is designed to be connected to the support-side electrical contact, and wherein the module-side electrical contact can be connected to the at least one electrochemical energy storage unit;
a module-side coupling element (410; 810), which is designed to be connected to the support-side coupling element, so that the energy storage module is held on one of the side walls of the support housing (106) of the module support (102) and the module-side cooling fluid connections (412) are connected to the support-side cooling fluid connections in a fluid-tight manner.

9. The energy storage module (104) according to claim 8, which has two cooling fluid boxes (806), wherein one each of the module-side cooling fluid connections (412) is arranged at one each of the cooling fluid boxes, and with two holding surfaces (804), which are arranged in each case between one of the cooling fluid boxes and the cooling plate (802) and in each case have a through opening for conveying the cooling fluid between the respective cooling fluid boxes and the cooling fluid channels.

10. The energy storage module (104) according to claim 9, wherein the module-side coupling element (410; 810) is designed as a rail element, which is arranged at at least one of the water boxes, so that the rail element can be inserted into the support-side coupling element.

11. The energy storage module (104) according to claim 8 or 9, wherein the module-side coupling element (410; 810) is designed as a hooking element, which is arranged on the holding surface (804) of the energy storage module, so that the hooking element can be hooked into the support-side coupling element.

12. A modular system (100; 300) having at least one module support (102) according to any one of claims 1 through 7 and at least one energy storage module (104) according to any one of claims 8 through 11, which is connected to the at least one module support.

## Revendications

1. Support de module (102) pour un système modulaire (100 ; 300) dans lequel une pluralité de modules d'accumulateurs d'énergie (104) peut être maintenue par au moins un support de module, où chacun des modules d'accumulateurs d'énergie présente deux raccords pour un fluide de refroidissement côté module (412), un contact électrique côté module (602) et un élément d'accouplement côté module (410 ; 810), où le support de module présente les caractéristiques suivantes :
un boîtier de support (106) comprenant deux parois latérales se faisant face l'une l'autre ;
un conduit de refroidissement (202) servant au guidage d'un fluide de refroidissement, où le conduit de refroidissement est disposé dans le boîtier de support et s'étend entre les parois latérales ;
deux raccords pour fluide de refroidissement côté support (206) qui sont conçus pour être reliés aux raccords pour fluide de refroidissement côté module, et où les raccords pour fluide de refroidissement côté support sont disposés dans l'une des parois latérales du boîtier de support et sont reliés au conduit de refroidissement ;
un contact électrique côté support (208) qui est conçu pour être relié au contact électrique côté module ;
un conduit (204) servant au guidage d'un conducteur électrique jusqu'au contact électrique côté support, où le conduit est disposé dans le boîtier de support et s'étend entre les parois latérales ; et
un élément d'accouplement côté support (108 ; 408) qui est conçu pour être relié à l'élément d'accouplement côté module, de sorte que le module d'accumulateur d'énergie (104) est maintenu contre l'une des parois latérales, et les raccords pour fluide de refroidissement côté support sont reliés, en étant étanches au fluide, aux raccords pour fluide de refroidissement côté module.

2. Support de module (102) selon la revendication 1, dans lequel le conduit de refroidissement (202) et le conduit (204) servant au guidage d'un conducteur électrique sont disposés en étant contigus l'un à l'autre dans le boîtier de support (106).

3. Support de module (102) selon la revendication 1 ou 2, dans lequel le raccord pour fluide de refroidissement côté support (206) présente une bride.

4. Support de module (102) selon l'une quelconque des revendications 1 à 3, dans lequel l'élément d'accouplement côté support (108 ; 408) est conçu comme au moins un rail qui est disposé pratiquement à angle droit par rapport aux parois latérales du boîtier de support (106), de sorte que le module d'accumulateur d'énergie (104) peut être maintenu dans le rail au moins au nombre de un, en faisant coulisser l'élément d'accouplement côté module (410 ; 810).

5. Support de module (102) selon l'une quelconque des revendications 1 à 3, dans lequel l'élément d'accouplement côté support (108 ; 408) est conçu comme un dispositif servant au logement d'un élément d'accrochage, dispositif qui est placé sur l'une des parois latérales du boîtier de support (106), de sorte que le module d'accumulateur d'énergie (104) peut être maintenu dans le dispositif servant au logement d'un élément d'accrochage, en accrochant l'élément d'accouplement côté module (410 ; 810).

6. Support de module (102) selon l'une quelconque des revendications précédentes, dans lequel le boîtier de support (106) présente au moins un élément de liaison qui est conçu pour relier le support de module à un autre support de module, de manière telle que les conduits de refroidissement (202) du support de module et de l'autre support de module soient reliés.

7. Support de module (102) selon l'une quelconque des revendications précédentes, dans lequel chacune des deux parois latérales se faisant face l'une l'autre présente au moins un raccord pour fluide de refroidissement côté support (206), au moins un contact électrique côté support (208) et au moins un élément d'accouplement côté support (108 ; 408).

8. Module d'accumulateur d'énergie (104) pour un système modulaire (100 ; 300) dans lequel une pluralité de modules d'accumulateurs d'énergie peut être maintenue par au moins un support de module (102) selon l'une quelconque des revendications précédentes, où chacun des supports de module présente deux raccords pour fluide de refroidissement côté support (206), un contact électrique côté support (208) et un élément d'accouplement côté support (108 ; 408), et où le module d'accumulateur d'énergie est conçu pour loger au moins un ensemble d'accumulateurs d'énergie électrochimique et présente les caractéristiques suivantes :
une plaque de refroidissement (802) comprenant une pluralité de conduits de fluide de refroidissement, où la plaque de refroidissement forme une plaque de fond du module d'accumulateur d'énergie ;
au moins une surface de maintien, en particulier une tôle de maintien (804) servant à la formation d'une zone de paroi du module d'accumulateur d'énergie ;
deux raccords pour fluide de refroidissement côté module (412) qui sont conçus pour être reliés aux raccords pour fluide de refroidissement côté support, et où les raccords pour fluide de refroidissement côté module sont couplés aux conduits de fluide de refroidissement de la plaque de refroidissement ;
un contact électrique côté module (602) qui est conçu pour être relié au contact électrique côté support, et où le contact électrique côté module peut être relié à l'ensemble d'accumulateurs d'énergie électrochimique au moins au nombre de un ;
un élément d'accouplement côté module (410 ; 810) qui est conçu pour être relié à l'élément d'accouplement côté support, de sorte que le module d'accumulateur d'énergie est maintenu contre l'une des parois latérales du boîtier de support (106) du support de module (102), et les raccords pour fluide de refroidissement côté module (412) sont reliés, en étant étanches au fluide, aux raccords pour fluide de refroidissement côté support.

9. Module d'accumulateur d'énergie (104) selon la revendication 8, qui présente deux boîtes à fluide de refroidissement (806), où respectivement l'un des raccords pour fluide de refroidissement côté module (412) est disposé respectivement sur l'une des boîtes à fluide de refroidissement, et comprenant deux surfaces de maintien (804) qui sont disposées à chaque fois entre l'une des boîtes à fluide de refroidissement et la plaque de refroidissement (802), et lesdites surfaces de maintien présentent à chaque fois une ouverture de passage servant à la circulation du fluide de refroidissement entre la boîte à fluide de refroidissement respective et les conduits de fluide de refroidissement.

10. Module d'accumulateur d'énergie (104) selon la revendication 9, dans lequel l'élément d'accouplement côté module (410 ; 810) est conçu comme un élément formant rail qui est disposé sur au moins l'une des boîtes à eau, de sorte que l'élément formant rail peut être coulissé dans l'élément d'accouplement côté support.

11. Module d'accumulateur d'énergie (104) selon la revendication 8 ou 9, dans lequel l'élément d'accouplement côté module (410 ; 810) est conçu comme un élément d'accrochage qui est disposé sur la surface de maintien (804) du module d'accumulateur d'énergie, de sorte que l'élément d'accrochage peut être accroché dans l'élément d'accouplement côté support.

12. Système modulaire (100 ; 300) comprenant au moins un support de module (102) selon l'une quelconque des revendications 1 à 7, et au moins un module d'accumulateur d'énergie (104) selon l'une quelconque des revendications 8 à 11, lequel module d'accumulateur d'énergie est relié au support de module au moins au nombre de un.
